# EUROPEAN PATENT APPLICATION

(11) **EP 4 682 769 A1**
(43) Date of publication of application: **21.01.2026**
(21) Application number: 24315348.3
(22) Date of filing: 18.07.2024
(51) Int. Cl.: G06N 3/094, G06N 3/098, G06N 3/126

(54) **DEVICE, SYSTEM AND METHOD FOR FEDERATED LEARNING USING RISK AUDITS**

(71) Applicant: Amadeus S.A.S., 06410 Biot (FR)
(72) Inventor: THOMAS, Eoin, 06600 Antibes (FR); DRIOUICH, Ilias, 06000 Nice (FR)
(74) Representative: Samson & Partner Patentanwälte mbB

(57) **Abstract**

A computing device, that is configured to configure a global machine learning model, performs respective electronic risk audits of client devices configured to train respective local machine learning models that correspond to a global machine learning model. Based on respective electronic risk scores of one or more of the client devices, determined via the respective electronic risk audits, the computing device implements one or more parameter privacy adjustment methods on respective parameters received from the client devices prior to using the respective parameters to configure the global machine learning model, wherein respective client devices determined to have higher electronic risk scores have more of the parameter privacy adjustment methods applied than other respective client devices determined to have lower electronic risk scores. The computing device provides, to the client devices, the global machine learning model configured according to the respective parameters as adjusted.

## Description

### FIELD

The specification relates generally to the federated learning of artificial intelligence models, and specifically to a device, system and method for federated learning using risk audits.

### BACKGROUND

Federated Learning (FL) is technique used to train artificial intelligence models in a distributed manner. For example, a central computing device distributes a same artificial intelligence model to many client devices, where it is trained using local training data. Local parameters of the artificial intelligence model (e.g., such as weights, and the like), determined at the client devices, are uploaded to the central computing device and used to configure a global version (e.g., a centrally maintained version) of the artificial intelligence model, which is then provided to the client devices, to update their local versions of the artificial intelligence model. However, one or more of the client devices may be operated by a malicious entity, such that the respective local parameters provided by a respective client device may poison and/or bias the global artificial intelligence model, and/or such a situation may render the global artificial intelligence model vulnerable to data reconstruction attacks, and the like. Existing methods of preventing data reconstruction attacks, and the like, mainly rely on static noise injection that comes at the cost of a decrease in performance of the artificial intelligence model. Furthermore, more traditional methods, like encrypted communications do not scale with large number of client devices. And while Trusted Execution Environments (TEEs) offer secure, private code execution and model protection, establishing a reliable TEE platform is hindered by resource limitations and complex communication requirements.

### SUMMARY

A first aspect of the present specification provides a method for performing federated learning, the method comprising: performing, at a computing device configured to configure a global machine learning model, respective electronic risk audits of client devices configured to train respective local machine learning models that correspond to the global machine learning model; based on respective electronic risk scores of one or more of the client devices, determined via the respective electronic risk audits, implementing, via the computing device, one or more parameter privacy adjustment methods on respective parameters received from the client devices prior to using the respective parameters to configure the global machine learning model, wherein respective client devices determined to have higher electronic risk scores have more of the parameter privacy adjustment methods applied than other respective client devices determined to have lower electronic risk scores; and providing, via the computing device, to the client devices, the global machine learning model configured according to the respective parameters as adjusted.

At the method of the first aspect, performing the respective electronic risk audits may comprise implementing, against the client devices, one or more of: a data reconstruction attack; an inference attack; a membership inference attack; a poisoning attack; an active adversarial data inference attack; and a passive adversarial data inference attack.

At the method of the first aspect, performing the respective electronic risk audits may comprise: determining client device level risk; and parameter level risk.

The method of the first aspect may further comprise: iteratively repeating the respective electronic risk audits and implementing the one or more parameter privacy adjustment methods until the respective electronic risk scores are below a threshold risk score.

The method of the first aspect may further comprise: aggregating the respective parameters, as adjusted, into aggregated adjusted parameters; configuring the global machine learning model using the aggregated adjusted parameters; performing a global model electronic risk audit of the global machine learning model configured according to the aggregated adjusted parameters; based on an electronic global model risk score of the global machine learning model configured according to the aggregated adjusted parameters, determined via the global model electronic risk audit, implementing one or more of the parameter privacy adjustment methods on the aggregated adjusted parameters, to generate updated aggregated adjusted parameters, wherein, as the electronic global model risk score increases, the more of the parameter privacy adjustment methods are used to adjust the aggregated adjusted parameters; using the updated aggregated adjusted parameters to configure the global machine learning model; and wherein providing, to the client devices, the global machine learning model configured according to the respective parameters as adjusted, comprises providing, to the client devices, the global machine learning model configured according to the updated aggregated adjusted parameters. In some of these examples, the method of the first aspect may further comprise: iteratively repeating the respective electronic risk audits, of one or more of the client devices, and the global model electronic risk audit of the global model, and implementing the one or more parameter privacy adjustment methods on the respective parameters received from the client devices and the aggregated adjusted parameters until the respective electronic risk scores are below a threshold risk score. In some of these examples, the method of the first aspect may further comprise: receiving raw training data, associated with the client devices, to measure one or more of: metrics of the global machine learning model configured according to the aggregated adjusted parameters; and data reconstruction ability of the global machine learning model configured according to the aggregated adjusted parameters.

The method of the first aspect may further comprise: dynamically adjusting the parameter privacy adjustment methods to achieve a balanced tradeoff between utility and risk of the global machine learning model.

At the method of the first aspect, implementing the one or more parameter privacy adjustment methods on the respective parameters includes: implementing two or more of the parameter privacy adjustment methods on the respective parameters; and one or more of adding and modifying weighting of the two or more of the parameter privacy adjustment methods.

The method of the first aspect may further comprise: prior to performing the respective electronic risk audits, performing one or more of the parameter privacy adjustment methods on the respective parameters received from the client devices.

A second aspect of the present specification provides a computing device for performing federated learning, the computing device comprising: a communication interface; a controller; and a computer-readable storage medium having stored thereon program instructions that, when executed by the controller, causes the controller to perform a set of operations comprising: performing, via the communication interface, respective electronic risk audits of client devices configured to train respective local machine learning models that correspond to a global machine learning model; based on respective electronic risk scores of one or more of the client devices, determined via the respective electronic risk audits, implementing one or more parameter privacy adjustment methods on respective parameters received from the client devices prior to using the respective parameters to configure the global machine learning model, wherein respective client devices determined to have higher electronic risk scores have more of the parameter privacy adjustment methods applied than other respective client devices determined to have lower electronic risk scores; and providing, via the communication interface, to the client devices, the global machine learning model configured according to the respective parameters as adjusted.

At the computing device of the second aspect, performing the respective electronic risk audits may comprise implementing, against the client devices, one or more of: a data reconstruction attack; an inference attack; a membership inference attack; a poisoning attack; an active adversarial data inference attack; and a passive adversarial data inference attack.

At the computing device of the second aspect, performing the respective electronic risk audits may comprise: determining client device level risk; and parameter level risk.

At the computing device of the second aspect, the set of operations may further comprise: iteratively repeating the respective electronic risk audits and implementing the one or more parameter privacy adjustment methods until the respective electronic risk scores are below a threshold risk score.

At the computing device of the second aspect, the set of operations may further comprise: aggregating the respective parameters, as adjusted, into aggregated adjusted parameters; configuring the global machine learning model using the aggregated adjusted parameters; performing a global model electronic risk audit of the global machine learning model configured according to the aggregated adjusted parameters; based on an electronic global model risk score of the global machine learning model configured according to the aggregated adjusted parameters, determined via the global model electronic risk audit, implementing one or more of the parameter privacy adjustment methods on the aggregated adjusted parameters, to generate updated aggregated adjusted parameters, wherein, as the electronic global model risk score increases, the more of the parameter privacy adjustment methods are used to adjust the aggregated adjusted parameters; using the updated aggregated adjusted parameters to configure the global machine learning model; and wherein providing, to the client devices, the global machine learning model configured according to the respective parameters as adjusted, may comprise providing, to the client devices, the global machine learning model configured according to the updated aggregated adjusted parameters. In some of these examples, the set of operations may further comprise: iteratively repeating the respective electronic risk audits, of one or more of the client devices, and the global model electronic risk audit of the global model, and implementing the one or more parameter privacy adjustment methods on the respective parameters received from the client devices and the aggregated adjusted parameters until the respective electronic risk scores are below a threshold risk score. In other aspects of these examples, the set of operations may further comprise: receiving raw training data, associated with the client devices, to measure one or more of: metrics of the global machine learning model configured according to the aggregated adjusted parameters; and data reconstruction ability of the global machine learning model configured according to the aggregated adjusted parameters.

At the computing device of the second aspect, the set of operations may further comprise: dynamically adjusting the parameter privacy adjustment methods to achieve a balanced tradeoff between utility and risk of the global machine learning model.

At the computing device of the second aspect, implementing the one or more parameter privacy adjustment methods on the respective parameters includes: implementing two or more of the parameter privacy adjustment methods on the respective parameters; and one or more of adding and modifying weighting of the two or more of the parameter privacy adjustment methods.

At the computing device of the second aspect, the set of operations may further comprise: prior to performing the respective electronic risk audits, performing one or more of the parameter privacy adjustment methods on the respective parameters received from the client devices.

A third aspect of the present specification provides a non-transitory computer-readable storage medium having stored thereon program instructions that, when executed by at least one computing device, configured to configure a global machine learning model, causes the at least one computing device to perform a method comprising: performing respective electronic risk audits of client devices configured to train respective local machine learning models that correspond to the global machine learning model; based on respective electronic risk scores of one or more of the client devices, determined via the respective electronic risk audits, implementing one or more parameter privacy adjustment methods on respective parameters received from the client devices prior to using the respective parameters to configure the global machine learning model, wherein respective client devices determined to have higher electronic risk scores have more of the parameter privacy adjustment methods applied than other respective client devices determined to have lower electronic risk scores; and providing, to the client devices, the global machine learning model configured according to the respective parameters as adjusted.

At the non-transitory computer-readable storage medium of the third aspect, performing the respective electronic risk audits may comprise implementing, against the client devices, one or more of: a data reconstruction attack; an inference attack; a membership inference attack; a poisoning attack; an active adversarial data inference attack; and a passive adversarial data inference attack.

At the non-transitory computer-readable storage medium of the third aspect, performing the respective electronic risk audits may comprise: determining client device level risk; and parameter level risk.

At the non-transitory computer-readable storage medium of the third aspect, the method may further comprise: iteratively repeating the respective electronic risk audits and implementing the one or more parameter privacy adjustment methods until the respective electronic risk scores are below a threshold risk score.

At the non-transitory computer-readable storage medium of the third aspect, the method may further comprise: aggregating the respective parameters, as adjusted, into aggregated adjusted parameters; configuring the global machine learning model using the aggregated adjusted parameters; performing a global model electronic risk audit of the global machine learning model configured according to the aggregated adjusted parameters; based on an electronic global model risk score of the global machine learning model configured according to the aggregated adjusted parameters, determined via the global model electronic risk audit, implementing one or more of the parameter privacy adjustment methods on the aggregated adjusted parameters, to generate updated aggregated adjusted parameters, wherein, as the electronic global model risk score increases, the more of the parameter privacy adjustment methods are used to adjust the aggregated adjusted parameters; using the updated aggregated adjusted parameters to configure the global machine learning model; and wherein providing, to the client devices, the global machine learning model configured according to the respective parameters as adjusted, comprises providing, to the client devices, the global machine learning model configured according to the updated aggregated adjusted parameters. In some of these examples, the method of the third aspect may further comprise: iteratively repeating the respective electronic risk audits, of one or more of the client devices, and the global model electronic risk audit of the global model, and implementing the one or more parameter privacy adjustment methods on the respective parameters received from the client devices and the aggregated adjusted parameters until the respective electronic risk scores are below a threshold risk score. In some of these examples, the method of the third aspect may further comprise: receiving raw training data, associated with the client devices, to measure one or more of: metrics of the global machine learning model configured according to the aggregated adjusted parameters; and data reconstruction ability of the global machine learning model configured according to the aggregated adjusted parameters.

At the non-transitory computer-readable storage medium of the third aspect, the method may further comprise: dynamically adjusting the parameter privacy adjustment methods to achieve a balanced tradeoff between utility and risk of the global machine learning model.

At the non-transitory computer-readable storage medium of the third aspect, implementing the one or more parameter privacy adjustment methods on the respective parameters includes: implementing two or more of the parameter privacy adjustment methods on the respective parameters; and one or more of adding and modifying weighting of the two or more of the parameter privacy adjustment methods.

At the non-transitory computer-readable storage medium of the third aspect, the method may further comprise: prior to performing the respective electronic risk audits, performing one or more of the parameter privacy adjustment methods on the respective parameters received from the client devices.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for federated learning using risk audits, according to non-limiting examples.
FIG. 2 depicts a computing device for federated learning using risk audits, according to non-limiting examples.
FIG. 3 depicts a method for federated learning using risk audits, according to non-limiting examples.
FIG. 4 depicts the system of FIG. 1 implementing a method for federated learning using risk audits, according to non-limiting examples.
FIG. 5 depicts the system of FIG. 1 implementing further aspects of a method for federated learning using risk audits, according to non-limiting examples.
FIG. 6 depicts the system of FIG. 1 implementing further aspects of a method for federated learning using risk audits, according to non-limiting examples.
FIG. 7 depicts the system of FIG. 1 implementing further aspects of a method for federated learning using risk audits, according to non-limiting examples.
FIG. 8 depicts the system of FIG. 1 implementing further aspects of a method for federated learning using risk audits, according to non-limiting examples.
FIG. 9 depicts the system of FIG. 1 implementing further aspects of a method for federated learning using risk audits, according to non-limiting examples.
FIG. 10 depicts the system of FIG. 1 implementing further aspects of a method for federated learning using risk audits, according to non-limiting examples.

### DETAILED DESCRIPTION

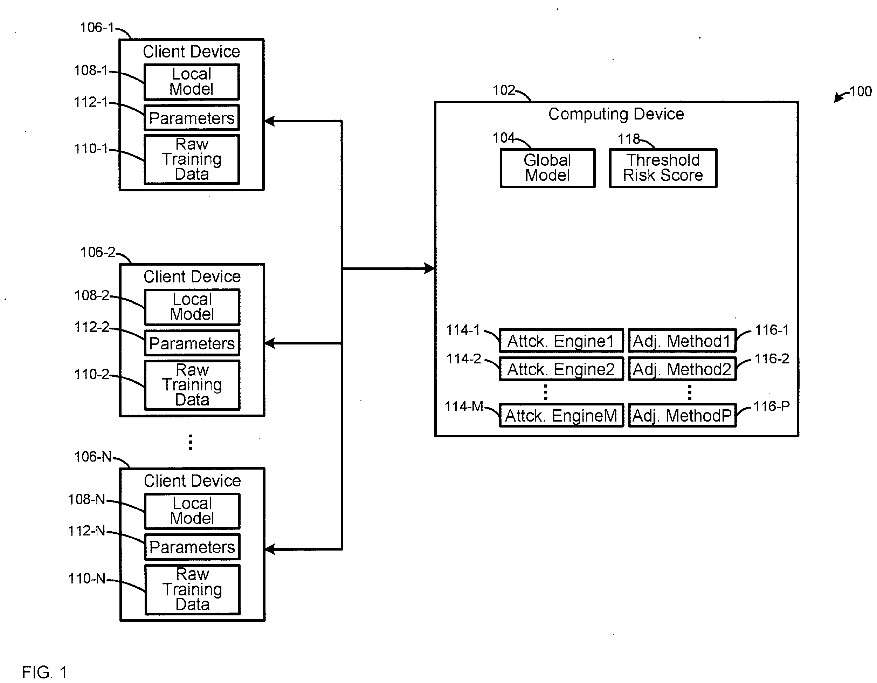

FIG. 1 depicts a system 100 for federated learning using risk audits. The various components of the system 100 are in communication via any suitable combination of wired and/or wireless communication links, and communication links between components of the system 100 are depicted in FIG. 1, and throughout the present specification, as double-ended arrows between respective components. The communication links may include any suitable combination of wireless and/or wired links and/or wireless and/or wired communication networks, and the like.

The system 100 will furthermore be described with respect to engines. As used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

The system 100 comprises a computing device 102 that is generally configured to configure and/or train a global machine learning model 104 (interchangeably referred to hereafter for simplicity as the global model 104), which may comprise any suitable machine learning model, including, but not limited to, one or more of a deep-learning based model; a neural network model; a generalized linear regression model; a random forest model; a support vector machine model; a gradient boosting regression model; a decision tree model; a generalized additive model; evolutionary programming models; Bayesian inference models, reinforcement learning models, and the like. However, any suitable machine learning model and/or deep learning model and/or neural network model is within the scope of present examples.

The computing device 102 is communicatively coupled to a plurality of client devices 106-1, 106-2...106-N (interchangeably referred to hereafter, collectively, as the client devices 106 and, generically, as a client device 106; this convention will be used elsewhere in the present specification). As depicted, the client devices 106 implement respective local versions of the global machine learning model 104, which are referred to herein as respective local machine learning models 108-1, 108-2...108-N (e.g., local models 108 and/or a local model 108) that correspond to the global machine learning model 104. For example, the global model 104 may be initially trained using initial training data (not depicted) available to the computing device 102 and copies of the initially trained global model 104 may be provided to the client devices 106 by the computing device 102 for use at the client devices 106.

However, in using the respective local models 108, the client devices 106 may generate, and/or have access to, local raw training data 110-1, 110-2...110-N (e.g., local raw training data 110 and/or a set of local raw training data 110), which may be used to locally train the respective local models 108, generating respective machine learning parameters 112-1, 112-2...112-N (e.g., parameters 112 and/or a set of parameters 112). A number "N" of the client devices 106, respective local machine learning models 108, respective sets of local raw training data 110, and respective sets of parameters 112 may be any suitable number, and may be on the order of tens, hundreds, thousands or hundreds of thousands, and/or any other suitable number.

In a particular illustrative example, the global model 104, and hence the local models 108, may comprise models for predictive text at electronic keyboards of the client devices 106. For example, at a client device 106, words and/or partially spelled words may be received as input at a respective local model 108, which provides predicted completed words as output. When the completed words are accepted at a client device 106, or corrected at the client device 106, the combination of the input and the accepted output, and/or the combination of the input and the corrected output may be placed in the respective local raw training data 110, and used to train the local model 108, thereby generating and/or updating respective parameters 112 of the local model 108. As each client device 106 may be trained to predict different words, which may be represented by the respective parameters 112 (e.g., which may be weights of the local machine learning models 108, classifiers of the local machine learning models 108, and the like), over time, each client device 106 may have different respective parameters 112 representing different training of the respective local models 108 to predict different words. The client devices 106 may provide the respective parameters 112 to the computing device 102, for example periodically, which may be aggregated at the computing device 102 and used to update the global model 104, which may then be trained to predict all the words represented by the aggregation of the respective parameters 112 from the client devices 106. The global model 104 may then be provided to the client devices 106 to update and/or replace the local models 108, such that a given client device 106 benefits from local training at all the other client devices 106.

Put another way, in federated learning, the computing device 102 aggregates the parameters 112 of the local models 108 to better train the global model 104, and such aggregated parameters 112 are then applied to the local models 108. In particular, in such federated learning, no local data sharing is permitted across the client devices 106 and only the respective parameters 112, for example in the form of model weights, are provided to the computing device 102 for aggregation.

While the global model 104, and hence the local models 108, have been described with respect to a particular functionality, the global model 104, and hence the local models 108, may be for any suitable functionality, including, but not limited to banking functionality (e.g., predicting whether a particular borrower is to be approved for a loan), medical functionality (e.g., predicting whether radiology images include cancer indications), amongst other possibilities.

Furthermore, at the client devices 106, different types of inputs may be used depending. Using banking functionality as an example, and in particular functionality of the models 104, 108 of predicting whether a particular borrower is to be approved for a loan, at one client device 106 (e.g., operated by a first bank), a combination of inputs may include borrower age, borrower credit history, and borrower income, whereas at another client device 106 (e.g., operated by a second bank), ), a combination of inputs may include borrower age, borrower credit history, borrower income, and borrower postal code. In this example, the local raw training data 110 for each client device 106 may include the inputs and corresponding outputs (e.g., approved or not approved, along with an amount of a loan that can be approved), or the input and corresponding corrected outputs (e.g., approved or not approved, as corrected by a bank officer, along with an amount of a loan that can be approved, as corrected by a bank officer), that are used to train the respective local models 108. Over time, the two client devices 106 are trained to generate similar types of outputs, but using different types of inputs.

As will be explained herein, one or more of the client devices 106 may be operated by a malicious entity, and/or may be operated in an insecure manner, such that the respective raw training data 110 and/or the respective parameters 112 may be "poisoned" which may be understood as causing a respective local model 108 to make predictions incorrectly (e.g., such as, in a simple example, words output by a respective local model 108 may be corrected to misspelled words and used to train the respective local model 108 to incorrectly output the misspelled words; or, in another example, a respective local model 108 may be trained to erroneously approve loans based on a bad credit history).

Furthermore, from the above examples, it is understood that a set of raw training data 110 may comprise inputs and corresponding outputs which may comprise any suitable combination of positive training data (e.g., an output corresponding to an input is a desired output) and negative training data (e.g., an output corresponding to an input is an undesired output). In some examples, the input may comprise sensitive data, such as personally identifiable information (PII) of a potential borrower requesting a loan, and the like. In some examples, then, inputs of the raw training data 110; and more specifically sensitive data of the inputs, may be determinable and/or inferable from the outputs.

As such, federated learning may be vulnerable to certain types of attacks, as described herein.

As such, the computing device 102 is generally configured to mitigate such attacks by performing federated learning using risk audits, which may generally include, but is not limited to, implementing different types of attacks on the client devices 106, which may represent different ways in which the client devices 106 may themselves be operated by, or attacked by, a malicious entity.

For example, as depicted, the computing device 102 may operate a plurality of attack engines 114-1, 1 14-2...1 14-M (e.g., attack engines 114 and/or an attack engine 114) which may be implemented by the computing device 102 to perform different types of attacks on the client devices 106, for example to test their reliability and/or vulnerability. Put another way, the attack engines 114 may be configured to perform a plurality of attacks on the client devices 106 that could be launched by a malicious entity.

In particular, the computing device 102 may be configured to perform respective electronic risk audits against the client devices 106, for example via the attack engines 114, by implementing, against the client devices 106, one or more of: a data reconstruction attack; an inference attack; a membership inference attack; a poisoning attack; an active adversarial data inference attack; a passive adversarial data inference attack, amongst other possibilities. For example, a given attack engine 114 may be specifically configured to perform a specific type of attack.

Furthermore, the computing device 102 may be generally configured to perform the respective electronic risk audits of the client devices 106 and assign respective electronic risk scores to the client devices 106, for example on a scale of 0 to 100, where "0" represents minimum risk and "100" represents maximum risk. Furthermore, as a plurality of attack engines 114 may be used to perform different attacks, with a client device 106 being more vulnerable to some types of attacks but not others, the respective electronic risk scores may be averages and/or weighted averages of respective electronic risk scores assigned to the different types of attacks. Weighted averages may be used when different types of attacks are understood to introduce greater risk into the federated learning than other types of attacks, and hence respective electronic risk scores associated with such greater risk attacks may be assigned a higher weight than lower risk attacks.

Different types of attacks and electronic risk scores are next described with respect to specific examples. In some of these examples, the computing device 102 may have access to the respective raw training data 110 of the client devices 106. Furthermore, in the following description, it is assumed that a malicious entity may gain access to at least a portion of outputs of a local model 108, but not the corresponding inputs. Furthermore, in the following description, it is understood that the client devices 106 are in respective preestablished trust relationships with the computing device 102 (e.g., by exchanging certificates, and the like) such that the client devices 106 have "agreed" to be audited and/or attacked by the computing device 102.

For example, one attack engine 114 may be configured to launch a data reconstruction attack on a client device 106 by using output from a respective set of respective local training data 110, and/or respective parameters 112, to reconstruct corresponding input. Whether or not a data reconstruction attack is successful, or not successful, may depend on the accuracy of the corresponding input that is reconstructed. For example, the computing device 102 may use output from a respective set of respective local training data 110, and/or respective parameters 112 (e.g., when access to such parameters 112 is available), to reconstruct corresponding input and compare the reconstructed corresponding input with the actual input of the respective local training data 110. An associated electronic risk score may indicate the degree that the reconstructed corresponding input compares with the actual input of the respective local training data 110, with an electronic risk score of "0" being assigned when no reconstructed corresponding input corresponds with the actual input of the respective local training data 110, a score of "100" being assigned when all the reconstructed corresponding input corresponds with the actual input of the respective local training data 110, and a score between "0" and "100" being assigned when a portion (but not all) of the reconstructed corresponding input corresponds with the actual input of the respective local training data 110.

Put another way, a data reconstruction attack on a client device 106 by the computing device 102 may indicate that the client device 106 is not vulnerable to a data reconstruction attacks and a respective electronic risk score of "0" may be assigned to the client device 106. Conversely, a data reconstruction attack on a client device 106 by the computing device 102 may indicate that the client device 106 is very vulnerable to a data reconstruction attacks and a respective electronic risk score of "100" may be assigned to the client device 106.

Another attack engine 114 may be configured to launch an inference attack on a client device 106 by using output of a set of raw training data 110 to infer corresponding input of the raw training data 110. An inference attack is similar to a data reconstruction attack however, in an inference attack, input of set of raw training data 110 is inferred rather than directly reconstructed.

Yet another attack engine 114 may be configured to launch a membership inference attack on a client device 106 by attempting to determine, using the output of a set of raw training data 110, whether or not a specific input was included in the set of raw training data 110. For example, in such an attack, the attack engine 114 may have access to a respective local model 108 and use, as input, a specific input (e.g., such as a borrower address and/or credit card number, or any other PII) and determine whether the corresponding output is included in the set of raw training data 110.

Yet another attack engine 114 may be configured to launch a poisoning attack on a client device 106 by attempting to add, and/or change, a set of raw training data 110 of the client device 106. Such a poisoning attack generally determines whether or not a client device 106 has sufficient security in place for accessing respective raw training data 110.

Yet another attack engine 114 may be configured to launch an active adversarial data inference attack on a client device 106 by interacting with a respective local model 108 to extract sensitive information (e.g., such as PII) or infer details about respective raw training data 110. In particular, in such an attack, a respective attack engine 114 may provide specific inputs to the respective local model 108 selected to elicit specific output from the respective local model 108. Such an attack generally determines whether or not a client device 106 has sufficient security in place for accessing respective raw training data 110.

Yet another attack engine 114 may be configured to launch a passive adversarial data inference attack by inferring sensitive information (e.g., PII) about respective raw training data 110 without actively interacting or modifying input to a respective local model 108. Rather, in contrast to an active adversarial data inference attack, the attack engine 114 passively "observes" the outputs or behaviors of the respective local model 108 over time, and analyzes patterns and characteristics of responses of the respective local model 108 responses to determine input of the respective local model 108. Such an attack generally determines whether or not a client device 106 has sufficient security in place for accessing respective raw training data 110, as well as whether or not the output is sufficient to hide the input.

Put another way, the computing device 102 generally performs the respective electronic risk audits by: determining client device level risk; and parameter level risk.

For example, some of the aforementioned attacks may be to assess a risk level of a client device 106, such as an ability of a client device 106 to ward off such attacks (client device level risk), whereas others of the aforementioned attacks may be to assess a risk of respective parameters 112 (parameter level risk) of a client device 106.

Furthermore, as a plurality of attack engines 114 may be used to perform different attacks, with a client device 106 being more vulnerable to some types of attacks but not others, the respective electronic risk scores may be averages and/or weighted averages of respective electronic risk scores assigned to the different types of attacks. Weighted averages may be used when different types of attacks are understood to introduce greater risk into the federated learning than other types of attacks, and hence respective electronic risk scores associated with such greater risk attacks may be assigned a higher weight than lower risk attacks.

For example, a data reconstruction attack may be an example of a greater risk attack, as a data reconstruction attack may lead to reconstruction of sensitive input data from outputs and/or parameters associated with a local model 108. For example, when a data reconstruction attack results in reconstructing of personal information (e.g., name, address, income) of a borrower from outputs of loan approval model (e.g. a local model 108), this poses a high risk. This attack can lead to severe privacy breaches by exposing highly sensitive data.

Conversely, a passive adversarial data inference attack may be an example of a lower risk attack, as a passive adversarial data inference attack involves observing outputs of a local model 108 over time without altering inputs to infer data properties or patterns. For example, a passive adversarial data inference attack may lead to inference of general trends or less sensitive information, such as average loan approval rates, by analyzing the outputs of a local model 108. The potential damage and sensitivity of the inferred information from a passive adversarial data inference attack may be lower than information determined from data reconstruction attack, making passive adversarial data inference attack a lower risk attack relative to a data reconstruction attack.

Hence, in this example, respective electronic risk scores associated with data reconstruction attacks may be assigned a higher weight than respective electronic risk scores associated with passive adversarial data inference attacks.

The number "M" of attack engines 114 may be any suitable number, which may increase over time as different types of electronic attacks are developed by malicious entities. For example, when a new type of electronic attack is determined (e.g., by an administrator of the system 100), a corresponding attack engine 114 may be developed and deployed at the computing device 102 (e.g., along with an associated weight).

The electronic risk scores assigned to the client devices 106 may be used to implement one or more parameter privacy adjustment methods 116-1, 116-2...116-P (e.g., parameter privacy adjustment methods 116 and/or a parameter privacy adjustment method 116) on respective parameters 112 received from the client devices 106 prior to using the respective parameters 112 to configure the global model 104. While not depicted, the parameter privacy adjustment methods 116 may be implemented as respective engines.

The parameter privacy adjustment methods 116 may comprise any suitable method for adjusting one or more sets of the respective parameters 112, which may include, but are not limited to one or more of the following.

One parameter privacy adjustment method 116 may include replacing a given parameter 112, of a given set of parameters 112 received from one or more of the client devices 106. For example, for a given client device 106, some weights of an associated given set of parameters 112 may be replaced with an average value of corresponding weights of respective parameters 112 from other client devices 106. Whether weights are replaced, and/or how many weights are replaced at given set of parameters 112, may depend on the respective electronic risk score of an associated client device 106. For example, when an associated electronic risk score is below a first threshold (e.g., such as "20" "30", "40", amongst other possibilities) no replacement may occur. However, when an associated electronic risk score is between the first threshold and a second threshold (e.g., such as "50" "60", "70", amongst other possibilities), a given first percentage (e.g., 15%, 20%, 25%, amongst other possibilities) of parameters 112 of the given set of respective parameters 112 may be replaced. Similarly, when an associated electronic risk score is between the second threshold and "100", a given second percentage (e.g., 30%, 35%, 40%, amongst other possibilities) of parameters 112 of the given set of respective parameters 112 may be replaced, the given second percentage being higher than the given first percentage. However any suitable parameter replacement scheme may be used such that, the higher the associated electronic risk score, the more parameters 112 may be replaced (e.g., with an average value of corresponding weights of respective parameters 112 from other client devices 106).

Alternatively, or in addition, another parameter privacy adjustment method 116 may include replacing a given parameter 112, of a given set of parameters 112 received from one or more of the client devices 106 may occur when given parameters 112 are greater than a capped weight. For example, again using the example of the models 104, 108 being used to predicting whether a particular borrower is to be approved for a loan, one or more weights of the parameters 112 may be associated with borrower income, which may often be inaccurately received (e.g., borrowers may indicate a higher income than they actually have). As such, weights of the parameters 112 associated with borrower income may be capped at a capped weight (e.g., assuming higher weights contribute more to output of a model 104, 108 than lower), and hence weights of the parameters 112 that are greater than an associated capped weight may be reduced to the capped weight. Whether weights are capped, or not, may depend on the respective electronic risk score of an associated client device 106. For example, when an associated electronic risk score is below a threshold (e.g., such as "40" "50", "60", amongst other possibilities), no capping may occur; and, conversely, when an associated electronic risk score is above the threshold, capping may occur

Yet another parameter privacy adjustment method 116 may include removing a given parameter 112, of a given set of parameters 112 received from one or more of the client devices 106. For example, weights associated with some features that are present in some raw training data 110, associated with one or more client devices 106, but not other client devices 106, may be removed. Using the example of the models 104, 108 being used to approve loans, some raw training data 110 associated with one or more client devices 106 may include, as input, postal codes of potential borrowers, whereas raw training data 110 associated with other client devices 106 may not include, as input, postal codes of potential borrowers. Indeed, weights associated with such features that are not common to the client devices 106 may be more easily reconstructed and/or inferred in one or more of the aforementioned attacks. In these examples, the computing device 102 may notify client devices 106 that include such non-common features in their respective raw training data 110 to stop collecting data related to such features (e.g., such as postal codes) as it will no longer be used in the federated learning. Whether or not weights are removed may depend on a respective electronic risk score, with weights being removed when a respective electronic risk score is below, for example a threshold (e.g., such "20", "30", "40", amongst other possibilities), and not removed when a respective electronic risk score is above the threshold.

Yet another parameter privacy adjustment method 116 may include inserting randomness into a given set of respective parameters 112. The degree of randomness may depend on an associated electronic risk score. For example, when an associated electronic risk score is below a first threshold e.g., such as "20" "30", "40", amongst other possibilities), no randomization may occur. However, when an associated electronic risk score is between the first threshold and a second threshold (e.g., such as "50" "60", "70", amongst other possibilities), parameters 112 of the given set of respective parameters 112 may be randomly adjusted by a given first percentage (e.g., 15%, 20%, 25%, amongst other possibilities), such that weights of the given set of respective parameters 112 are randomly adjusted up or down by the given first percentage. Similarly, when an associated electronic risk score is between the second threshold and "100", parameters 112 of the given set of respective parameters 112 by may be randomly adjusted by a given second percentage (e.g., 30%, 35%, 40%, amongst other possibilities), such that weights of the set of respective parameters 112 are randomly adjusted up or down by the given second percentage. In general, in some examples, the higher the associated electronic risk score, the more randomness may be introduced into the parameters 112.

Combining and/or mixing two or more given sets of the respective parameters 112. For example, while the respective parameters 112 are not shared between the client devices 106, when two or more client devices 106 are associated with respective electronic risk scores above a threshold (e.g., 40%, 50%, 60%, amongst other possibilities), the respective parameters 112 associated with such client devices 106 may be combined and/or mixed to generate a combined and/or mixed set of respective parameters 112 that may be used to update the global model 104.

Furthermore, a number of parameter privacy adjustment methods 116 applied to the respective parameters 112 for of given client device 106 may depend on the respective electronic risk score. For example, for electronic risk scores below a first given threshold

(e.g., "10", "15", "20", amongst other possibilities), only one parameter privacy adjustment method 116 may be applied. However, for electronic risk scores between the first given threshold and a second given threshold (e.g., "25", "30", "35", amongst other possibilities), two parameter privacy adjustment methods 116 may be applied. However, for electronic risk scores between the second given threshold and a third given threshold (e.g., "40", "50", "60", amongst other possibilities), three parameter privacy adjustment methods 116 may be applied. And, for electronic risk scores greater than the third given threshold (e.g., "40", "50", "60", amongst other possibilities), all the parameter privacy adjustment methods 116 may be applied. In general, the higher the electronic risk score, the more parameter privacy adjustment methods 116 may be applied.

Put another way, respective client devices 106 determined to have higher electronic risk scores have more of the parameter privacy adjustment methods 116 applied than other respective client devices 106 determined to have lower electronic risk scores.

Furthermore, the parameter privacy adjustment methods 116 may be ranked, such that replacing a given parameter 112 may be ranked higher than removing a given parameter 112, which may be ranked higher than mixing parameters 112, and the like. As such, higher ranked parameter privacy adjustment methods 116 may be used prior to lower ranked parameter privacy adjustment methods 116. Such rankings may be heuristically determined.

Alternatively, or in addition, the parameter privacy adjustment methods 116 that are used may depend on which attack engines 114 resulted in highest respective electronic risk scores. When a data reconstruction attack implemented by one attack engine 114 against two given client devices 106 resulted in a high electronic risk score relative to a membership inference attack implemented by another attack engine 114 against the two given client devices 106, a parameter privacy adjustment method 116 corresponding to parameter mixing may be prioritized and/or used by the computing device 102 before other parameter privacy adjustment methods 116. On the other hand, when a membership inference attack implemented by one attack engine 114 against a given client device 106 resulted in a high electronic risk score relative to a data reconstruction attack implemented by another attack engine 114 against the given client device 106, a parameter privacy adjustment method 116 corresponding to parameter replacement may be prioritized and/or used by the computing device 102 before other parameter privacy adjustment methods 116.

Once the respective parameters 112 are updated in any suitable manner via one or more of the parameter privacy adjustment methods 116, and the global model 104 is configured using the adjusted/updated respective parameters 112, the computing device 102 provides the global model 104, configured according to the respective parameters 112, as adjusted, to the client devices 106, which are used to update the local models 108.

The computing device 102 may repeat this process, for example by iteratively repeating the respective electronic risk audits and implementing the one or more parameter privacy adjustment methods 116 until the respective electronic risk scores are below a threshold risk score 118, for example such as "20", using a scale of "0" to "100".

Furthermore, such iterative repeating of the respective electronic risk audits and implementing the one or more parameter privacy adjustment methods 116 may result in dynamic adjustment of the parameter privacy adjustment methods 116 to achieve a balanced tradeoff between utility and risk of the global machine learning model 104. For example, if the threshold risk score 118 is "too high" (e.g., greater than "50"), there may be better utility of the models 104, 108, but there is then a high risk of the aforementioned attacks by a malicious entity being successful. Conversely if the threshold risk score 118 is "too low" (e.g., lower than "5"), there may be too much adjustment of the parameters 112 such that utility of the models 104, 108, is low (e.g., outputs thereof may not be accurate). The threshold risk score 118 may be selected heuristically to balance utility and risk of the global machine learning model 104, and may be "25", "30", or "35", amongst other possibilities.

In some examples, one or more of the parameter privacy adjustment methods 116 may be implemented on the respective parameters 112 received from the client devices 106 prior to performing the respective electronic risk audits. In these examples, no electronic risk scores are initially determined. Rather, prior to any electronic risk audits, the computing device 102 may use one or more of the parameter privacy adjustment methods 116 to adjust the respective parameters 112 (e.g., such as replacing one or more parameters 112), which are used to configure the global model 104 accordingly, and the computing device 102 may provide the updated global model 104 to the client devices 106 for use as respective local models 108. After some time, the computing device 102 may then perform the respective electronic risk audits, etc.

Furthermore, in some examples, an electronic risk audit of the updated global model 104 (and the computing device 102) may occur using the attack engines 114, and an electronic risk score may be assigned accordingly. In these examples, for clarity, and to distinguish from electronic risk audits and electronic risk scores associated with the client devices, an electronic risk audit of the updated global model may be referred to as an electronic global model risk audit, and an associated electronic risk score may be referred to as an electronic global model risk score. The electronic global model risk score may be used to select a number of the parameter adjustment methods 116 (e.g., with a number of parameter privacy adjustment methods 116 that are applied increasing as the electronic global model risk score increases), similar to as described with respect to the parameters 112 of the client devices 106, and the number of the parameter adjustment methods 116 may be used to adjust the aggregated parameters 112 to generate aggregated adjusted parameters 112. The aggregated adjusted parameters 112 may be used to configure the updated global model 104, for example prior to providing the updated global model 104 to the client devices 106.

It is further understood that, to perform the electronic global model risk audit, the computing device 102 may request, and receive, one or more sets of the raw training data 110 from the client devices 106, for example to compare results of the attacks using the attack engines 114 with the raw training data 110.

Furthermore, as the computing device 102 may not be configured to attack itself, in some examples, a virtual machine representing a copy of the computing device 102 may be configured with the updated global model 104, and the computing device 102 may perform the electronic global model risk audit, using the attack engines 114, on the virtual machine to determine the electronic global model risk score.

In particular, while adjustments to local parameters 112 of the client devices 106 may mitigate risks at the client devices 106, the aggregation of local parameters 112 from a plurality of the client devices 106 may introduce new vulnerabilities that are not apparent when performing respective risk audits of the client devices 106. Hence, in some examples, additional privacy adjustments of aggregated parameters 112, using or more parameter privacy adjustment methods 116, may address these compounded risks, and which may provide a comprehensive defense against potential attacks than when adjusting the local parameters 112 alone.

In these examples, the computing device 102 may iteratively repeat the respective electronic risk audits and the electronic global model risk audit, and implement the parameter privacy adjustment methods until both the respective electronic risk scores of client devices and the electronic global model risk score are below the predefined threshold risk score 118, which may ensure optimal model performance and security of the federated learning as described herein.

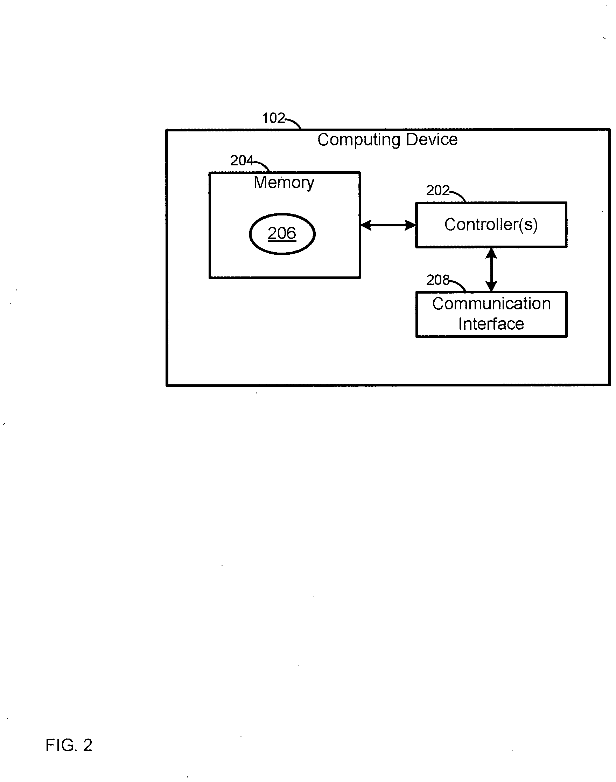

Turning to FIG. 2, before discussing the functionality of the system 100 in greater detail, certain components of the computing device 102 will be described. While depicted as one device, the computing device 102 may comprise one or more computing devices and/or one or more cloud computing devices that may be geographically distributed.

As shown in FIG. 2, the computing device 102 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the computing device 102 to communicate with the other components of the system 100, though it is understood such communication may occur locally when components of the system 100 are combined. The communication interface 208 therefore may include any necessary components (e.g., network interface controllers (NICs), radio units, and the like) to communicate with components of the system 100. The specific components of the communication interface 208 may be selected based on upon a nature of one or more networks that the components of the system 100 use to communicate, and/or local communication between components of the system 100, and the like. The computing device 102 may also include input and output devices connected to the controller 202, such as keyboards, pointing devices, display screens, and the like.

The components of the computing device 102 mentioned above may be deployed in a single enclosure, or in a distributed format. In some examples, therefore, the computing device 102 includes a plurality of processors, either sharing the memory 204 and communication interface 208, or each having distinct associated memories and communication interfaces. As such, it is understood that the memory 204, and/or a portion of the memory 204, may be internal (e.g., as depicted) or external to the computing device 102; regardless, the controller 202 is understood to have access to the memory 204.

Furthermore the application 206 may comprise computer-readable programming instructions, executable by the controller 202.

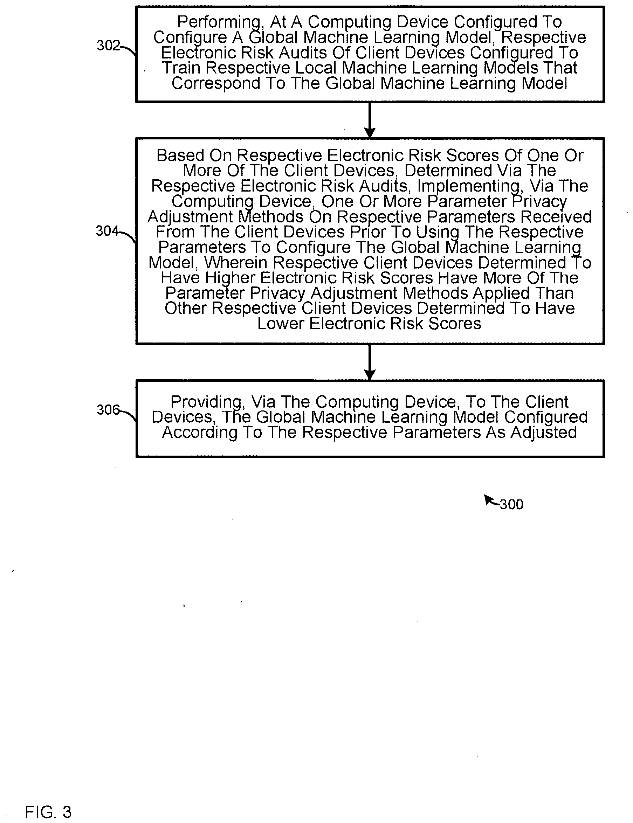

As will be understood by those skilled in the art, the controller 202 executes the instructions of the application 206 in order to perform a set of operations defined by the instructions contained therein including, but not limited to, the blocks of a method described with respect to FIG. 3. In the description below, the controller 202, and more generally the computing device 102, are understood to be configured to perform those actions. It will be understood that they are so configured via the execution (by the controller 202) of the instructions of the application stored in the memory 204. Put another way, the computing device 102 may comprise a computer-readable storage medium (e.g., a non-transitory computer-readable storage medium, such as the memory 204) having stored thereon program instructions that, when executed by the controller 202, causes the controller 202 to perform a set of operations comprising the blocks of the method described with respect to FIG. 3.

While structure of the client devices 106 are not described in detail, the client devices 106 may be understood to have a similar structure as the computing device 102, but adapted for respective functionality of the client devices 106.

Attention is now directed to FIG. 3, which depicts a flowchart representative of a method 300 a method for federated learning using risk audits. The operations of the method 300 correspond to machine readable instructions that are executed by the computing device 102, and specifically the controller 202 of the computing device 102. In the illustrated example, the instructions represented by the blocks of the method 300 are stored at the memory 204 for example, as the application 206. The method 300 is one way in which the system 100 and/or the computing device 102 may be configured. Furthermore, the following discussion of the method 300 will lead to a further understanding of the system 100, and its various components.

The method 300 need not be performed in the exact sequence as shown and likewise various blocks may be performed in parallel rather than in sequence. Accordingly, the elements of a method 300 are referred to herein as "blocks" rather than "steps." The method 300 may be implemented on variations of the system 100 of, as well.

Furthermore, in the method 300, it is understood that the controller 202, and/or the computing device 102, is generally configured to configure the global machine learning model 104, as described herein.

At a block 302, the controller 202, and/or the computing device 102, performs (e.g., via the communication interface 208) respective electronic risk audits of client devices 106 configured to train respective local machine learning models 108 that correspond to the global machine learning model 104.

At a block 304, the controller 202, and/or the computing device 102, based on respective electronic risk scores of one or more of the client devices 106, determined via the respective electronic risk audits, implements one or more parameter privacy adjustment methods 116 on respective parameters 112 received (e.g., via the communication interface 208) from the client devices 106 prior to using the respective parameters 112 to configure the global machine learning model 104. In particular, respective client devices 106 determined to have higher electronic risk scores have more of the parameter privacy adjustment methods 116 applied than other respective client devices 106 determined to have lower electronic risk scores.

At a block 306, the controller 202, and/or the computing device 102, provides (e.g., via the communication interface 208), to the client devices 106, the global machine learning model 104 configured according to the respective parameters 112 as adjusted.

The method 300 may include other features as has been previously described.

For example, the controller 202, and/or the computing device 102, may perform the respective electronic risk audits by implementing, against the client devices 106, one or more of: a data reconstruction attack; an inference attack; a membership inference attack; a poisoning attack; an active adversarial data inference attack; a passive adversarial data inference attack; amongst other possibilities. Respective electronic risk scores are determined accordingly, and an electronic risk score (e.g., an average of respective electronic risk scores for the different types of attacks) may be accordingly determined for a client device 106.

Furthermore, the controller 202, and/or the computing device 102, may perform the respective electronic risk audits by: determining client device level risk; and parameter level risk.

The method 300 may further comprise the controller 202, and/or the computing device 102: iteratively repeating the respective electronic risk audits and implementing the one or more parameter privacy adjustment methods 116 until the respective electronic risk scores are below a threshold risk score 118.

The method 300 may further comprise the controller 202, and/or the computing device 102: dynamically adjusting the parameter privacy adjustment methods 116 to achieve a balanced tradeoff between utility and risk of the global machine learning model 104. For example, as has been previously described, behavior of at least some parameter privacy adjustment methods 116 may depend on associated electronic risk scores of the client devices 106.

Furthermore, implementing the one or more parameter privacy adjustment methods 116 on the respective parameters 112 may include: implementing two or more of the parameter privacy adjustment methods 116 on the respective parameters 112; and one or more of adding and modifying weighting of the two or more parameter privacy adjustment methods 116.

The method 300 may further comprise the controller 202, and/or the computing device 102: prior to performing the respective electronic risk audits, performing one or more of the parameter privacy adjustment methods 116 on the respective parameters 112 received from the client devices 106.

The method 300 may further comprise the controller 202, and/or the computing device 102: aggregating the respective parameters 112, as adjusted, into aggregated adjusted parameters; configuring the global machine learning model 104 using the aggregated adjusted parameters 112; performing a global model electronic risk audit of the global machine learning model 104 configured according to the aggregated adjusted parameters 112; based on an electronic global model risk score of the global machine learning model 104 configured according to the aggregated adjusted parameters 112, determined via the global model electronic risk audit, implementing one or more of the parameter privacy adjustment methods 116 on the aggregated adjusted parameters 112, to generate updated aggregated adjusted parameters, and, as the electronic global model risk score increases, the more of the parameter privacy adjustment methods 116 are used to adjust the aggregated adjusted parameters 112; using the aggregated adjusted parameters 112 to configure the global machine learning model 104; and providing, at the block 306, to the client devices 106, the global machine learning model 104 configured according to the respective parameters 112 as adjusted, comprises: providing, to the client devices 106, the global machine learning model 104 configured according to the updated aggregated adjusted parameters.

Put another way, after an updated global model 104 is configured using the parameters 112 as adjusted and aggregated, another electronic risk audit may occur on the updated global model 104, and the parameters 112, as adjusted and aggregated, may again be adjusted using one or more of the parameter privacy adjustment methods 116.

The combination of blocks 302, 304, the global model electronic risk audit, and further adjustment of aggregated adjusted parameters 112 may occur iteratively until the various electronic risk scores (including the electronic global model risk score) are at or below the threshold risk score 118.

Put another way, the method 300 may further comprise, the controller 202 and/or the computing device 102: iteratively repeating the respective electronic risk audits, of one or more of the client devices 106, and the global model electronic risk audit of the global model 104, and implementing the one or more parameter privacy adjustment methods 116 on the respective parameters 112 received from the client devices 106, and the aggregated adjusted parameters 112, until the respective electronic risk scores are below the threshold risk score 118.

Such implementations may include the computing device 102 having access to the raw training data 110. For example, for the global model electronic risk audit, the method may further comprise the controller 202 and/or the computing device 102: sharing raw training data 110, associated with the client devices 106, with the global machine learning model 104 to measure one or more of: metrics thereof; and data reconstruction ability, using, for example, one or more of the attack engines 114.

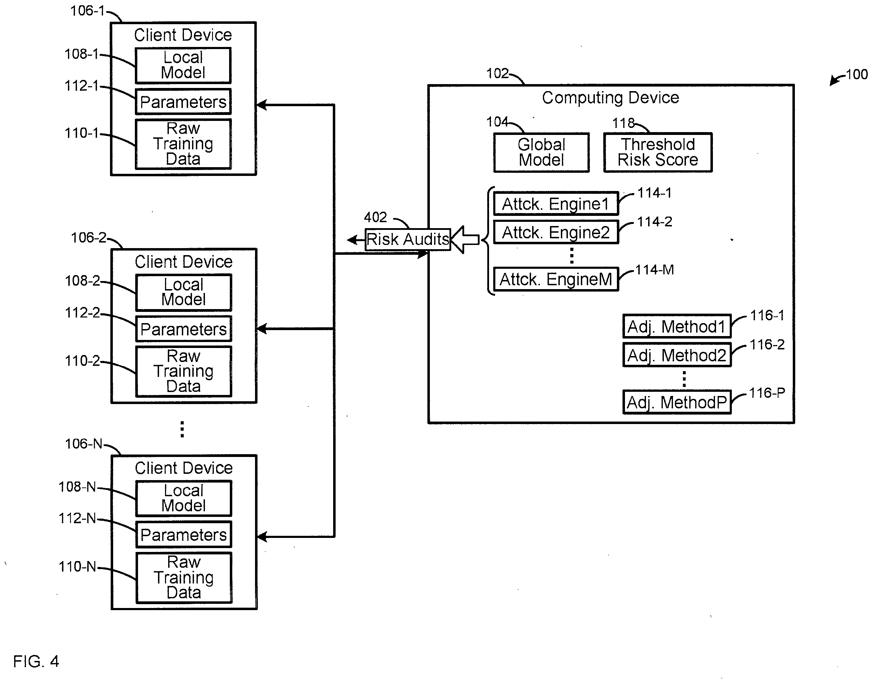

An example of the method 300 is described with respect to FIG. 4, FIG. 5, FIG. 6, FIG. 7, FIG. 8, FIG. 9 and FIG. 10, which are substantially similar to FIG. 1, with like components having like numbers.

Attention is first directed to FIG.4, which depicts the computing device 102 implementing the attack engines 114 to perform (e.g., at the block 302 of the method 300) respective risk audits 402 on the client devices 106. While the individual attacks against the client devices 106 are not depicted, it is understood that the respective risk audits 402 represent a plurality of attacks, using the attack engines 114, against the client devices 106. Furthermore, it is understood that, in performing the respective risk audits 402, the computing device 102 may have access to the raw training data 110 of the client devices 106, for example to compare the results of the attacks against inputs of the raw training data 110.

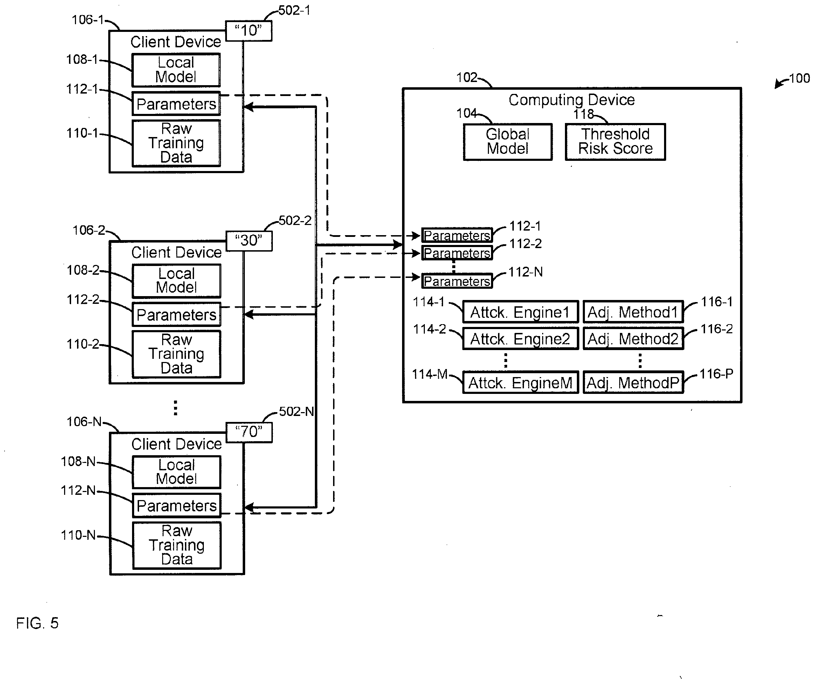

In particular, and with reference to FIG. 5, using results of the respective risk audits 402, the computing device 102 may assign respective electronic risk scores 502-1, 502-2...502-N (e.g., electronic risk scores 502 and/or an electronic risk score 502) to the client devices 106. For example, as depicted, the computing device 102 has assigned an electronic risk score 502-1 of "10" to the first client device 106-1, an electronic risk score 502-2 of "38" to the second client device 106-2, and an electronic risk score 502-N of "70" to the N^{th} client device 106-N. While for clarity the electronic risk scores 502 are depicted as being at the client devices 106 (e.g., the client devices 106 are labelled and/or tagged with respective electronic risk scores 502), the computing device 102 may at least temporarily store the electronic risk scores 502 in association with identifiers of the client devices 106 at the memory 204.

As also depicted in FIG. 5, the client devices 106 provide their respective parameters 112 to the computing device 102, which may occur before, after, or during the risk audits 402.

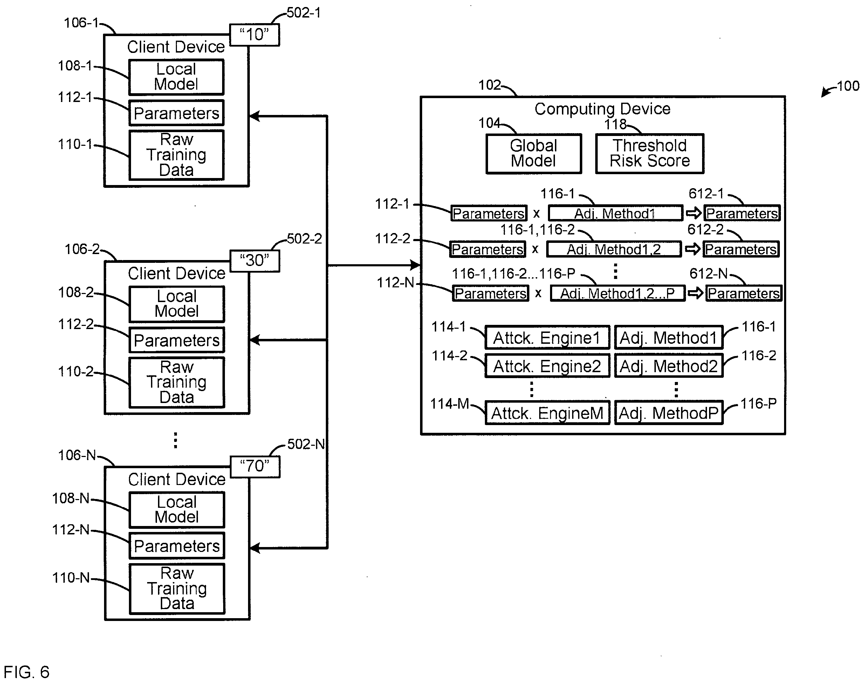

With attention next directed to FIG. 6, the computing device 102 implements (e.g., at the block 304 of the method 300) one or more parameter privacy adjustment methods 116 on respective parameters 112 received from the client devices 106 to generate adjusted parameters 612-1, 612-2...612-N (e.g., adjusted parameters 612 and/or a set of adjusted parameters 612). In particular, respective client devices 106 determined to have higher electronic risk scores 502 have more of the parameter privacy adjustment methods 116 applied to their respective parameters 112 than other respective client devices 106 determined to have lower electronic risk scores 502.

For example, and using a first given threshold of "20", a second given threshold of "35", and a third given threshold of "60", as the first client device 106-1 is associated with an electronic risk score 502-1 of "10" that is below the first given threshold of "20", only one parameter privacy adjustment method 116, and in particular the parameter privacy adjustment method 116-1, is applied to the respective parameters 112-1 to generate respective adjusted parameters 612-1.

Similarly, as the second client device 106-2 is associated with an electronic risk score 502-2 of "30" that is between the first given threshold of "20" and the second given threshold of "35", two parameter privacy adjustment methods 116, and in particular the parameter privacy adjustment methods 116-1, 116-2, are applied to the respective parameters 112-2 to generate respective adjusted parameters 612-2.

Similarly, as the N^{th} client device 106-N is associated with an electronic risk score 502-N of "70" that is above the third given threshold of "60, all the parameter privacy adjustment methods 116-1, 116-1...116-P, are applied to the respective parameters 112-N to generate respective adjusted parameters 612-N.

It is further understood that any client devices 106 associated with an electronic risk score 502 that is between the second given threshold of "35" and the third given threshold of "60", may have more than two, but less than "P" parameter privacy adjustment methods 116 applied to the respective parameters 112 to generate respective adjusted parameters 612.

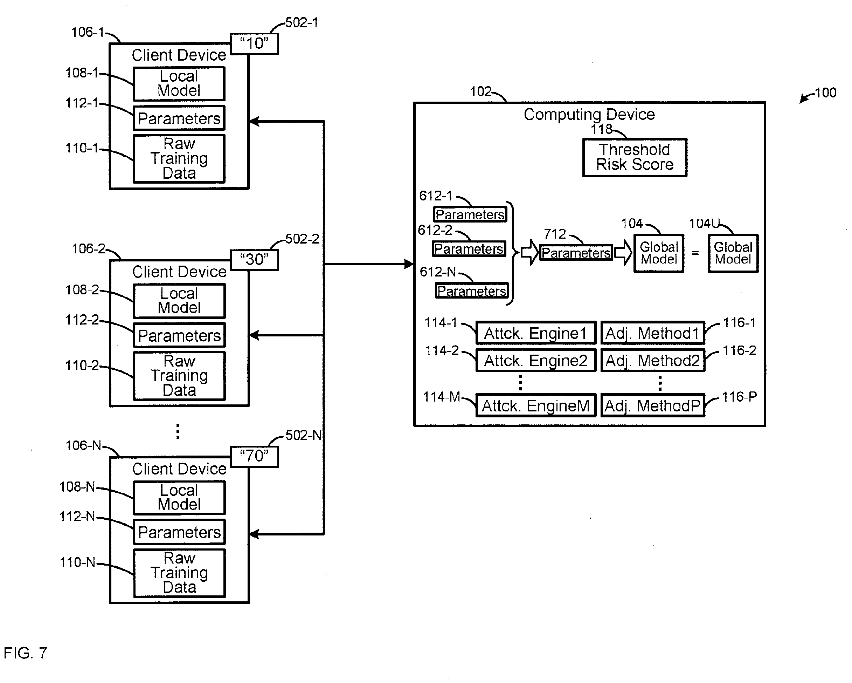

Attention is next directed to FIG. 7, which depicts the global model 104 being updated using the adjusted parameters 612. In particular, the computing device 102 combines the adjusted parameters 612 in any suitable manner to generate aggregated adjusted parameters 712, which, as depicted, are used to configure the global model 104 accordingly, thereby generating an adjusted global model 104U. The adjusted global model 104U is generally understood to incorporate all the local "learning" of the client devices 106, represented by the parameters 112, though adjusted via the adjusted parameters 612 to mitigate risk. Combining the adjusted parameters 612 to generate the aggregated adjusted parameters 712 may occur using any suitable federated learning techniques.

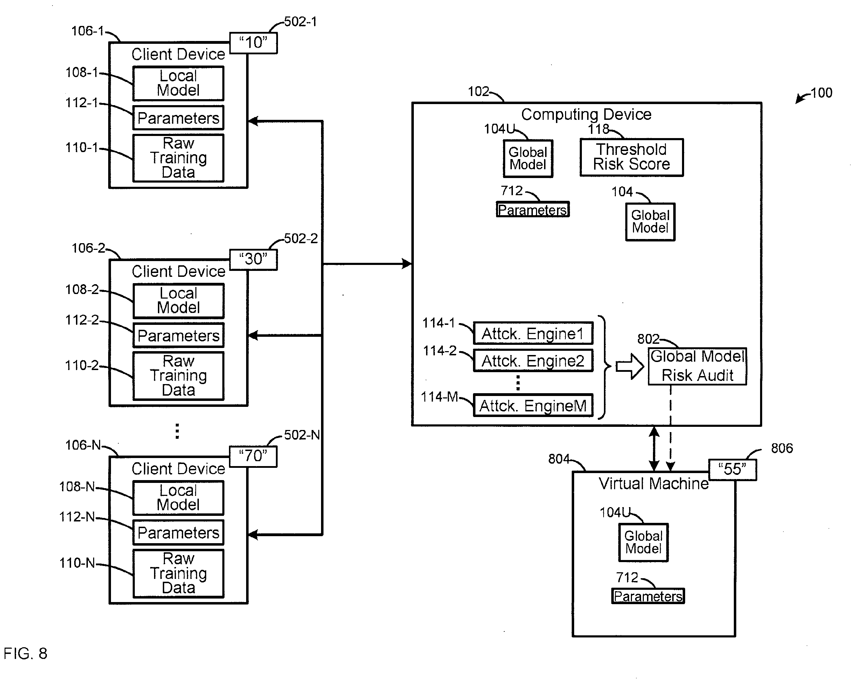

Attention is next directed to FIG. 8, which depicts the computing device 102 performing an electronic global model risk audit 802, using the attack engines 114, on the adjusted global model 104U, as implemented at a virtual machine 804, which the computing device 102 may at least temporarily generate according to any suitable process. While the virtual machine 804 is depicted as external to the computing device 102, for example implemented at computing resources available to the computing device 102 (e.g. such as a cloud computing device, and the like), the virtual machine 804 may be implemented at the computing device 102. Indeed, the virtual machine 804 may be implemented in any suitable manner.

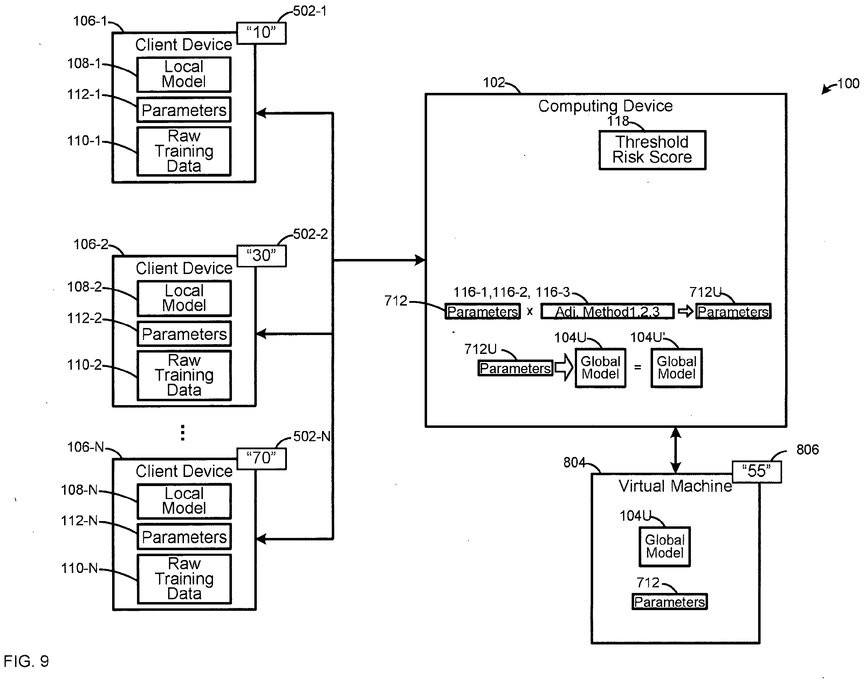

The virtual machine 804 is understood to be a virtual copy of the computing device 102 such that the electronic global model risk audit 802 comprises an electronic risk audit of both the adjusted global model 104U and the computing device 102. The virtual machine 804 may also maintain a copy of the aggregated adjusted parameters 712. Furthermore, while not depicted, it is understood that the computing device 102 has access to the raw training data 110 of the client devices 106 to assist in assigning an electronic global model risk score 806 to the adjusted global model 104U and/or the virtual machine 804. As depicted, the electronic global model risk score 806 is "55", which may be between the aforementioned second given threshold of "35" and the aforementioned third given threshold of "60". As such, and with attention next directed to FIG. 9, the computing device 102 may apply three parameter privacy adjustment methods 116-1, 116-1, 116-3 to the aggregated adjusted parameters 712 to generate updated aggregated adjusted parameters 712U.

As also depicted in FIG. 9, the computing device 102 may use the updated aggregated adjusted parameters 712U to configure the global model 104, and/or (e.g., a depicted) the adjusted global model 104U, to generate an updated adjusted global model 104U'.

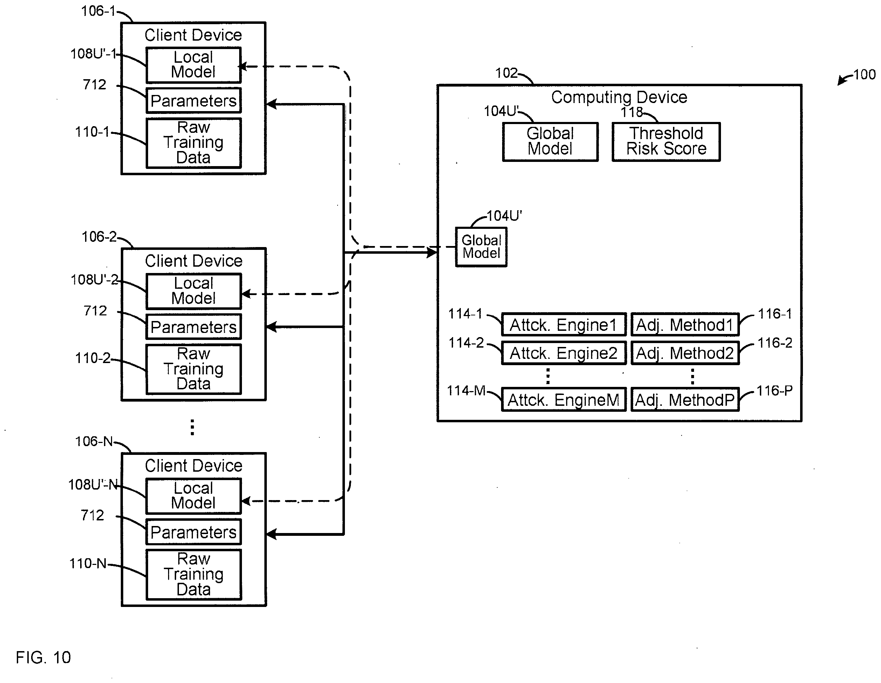

Attention is directed to FIG. 10, which depicts the computing device 102 providing (e.g., at the block 306 of the method 300) the updated adjusted global model 104U' (e.g., the global model 104 configured according to the respective parameters 112 as adjusted and updated, for example as the updated aggregated adjusted parameters 712U), to the client devices 106. In particular, the updated adjusted global model 104U' is respectively stored at the client devices 106 as respective adjusted local models 108U'-1, 108U'-2...108U'-N (e.g., adjusted local models 108U' and/or an adjusted local model 108U'). Furthermore, it is understood that the respective parameters 112 of the client devices 106 all change to the updated aggregated adjusted parameters 712U, at least initially. While not depicted, the raw training data 110 of the client devices 106 previously used to generate the respective parameters 112 may be cleared and/or deleted, and new respective raw training data 110 may be collected by the client devices 106 and used to train the respective adjusted local models 108U', which results in the updated aggregated adjusted parameters 712U changing in different ways at the client devices 106. Also in FIG. 10, the respective risk scores 502 of the client devices 106 are removed as, after the respective adjusted local models 108U' are configured, it is understood that the respective risk scores 502 are now stale and another risk audit may be used to again determine the respective risk scores 502. Similarly, the computing device 102 may remove the virtual machine 804 and the electronic global model risk score 806.

Furthermore, the processes described with respect to FIG. 4 to FIG. 10 may be iteratively repeated until the respective electronic risk scores 502 and the electronic global model risk score 806 are all below the threshold risk score 118.

As should by now be apparent, the operations and functions of the devices described herein are sufficiently complex as to require their implementation on a computer system, and cannot be performed, as a practical matter, in the human mind. In particular, computing devices, and the lie, such as set forth herein are understood as requiring and providing speed and accuracy and complexity management that are not obtainable by human mental steps, in addition to the inherently digital nature of such operations (e.g., a human mind cannot interface directly with, RAM or other digital storage, cannot perform electronic risk audits on client devices, amongst other features and functions set forth herein).

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method (300) for performing federated learning, the method (300) comprising:
performing (302), at a computing device (102) configured to configure a global machine learning model (104), respective electronic risk audits of client devices (106) configured to train respective local machine learning models (108) that correspond to the global machine learning model (104);
based on respective electronic risk scores of one or more of the client devices (106), determined via the respective electronic risk audits, implementing (304), via the computing device (102), one or more parameter privacy adjustment methods (116) on respective parameters (112) received from the client devices (106) prior to using the respective parameters (112) to configure the global machine learning model (104), wherein respective client devices (106) determined to have higher electronic risk scores have more of the parameter privacy adjustment methods (116) applied than other respective client devices (106) determined to have lower electronic risk scores; and
providing (306), via the computing device (102), to the client devices (106), the global machine learning model (104) configured according to the respective parameters (112) as adjusted.

2. The method (300) of claim 1, wherein performing the respective electronic risk audits comprises implementing, against the client devices (106), one or more of:
a data reconstruction attack;
an inference attack;
a membership inference attack;
a poisoning attack;
an active adversarial data inference attack; and
a passive adversarial data inference attack.

3. The method (300) of claim 1 or 2, wherein performing the respective electronic risk audits comprises:
determining client device level risk; and
parameter level risk.

4. The method (300) according to one of claims 1 to 3, further comprising:
iteratively repeating the respective electronic risk audits and implementing the one or more parameter privacy adjustment methods (116) until the respective electronic risk scores are below a threshold risk score.

5. The method (300) according to one of claims 1 to 4, further comprising:
aggregating the respective parameters (112), as adjusted, into aggregated adjusted parameters (712);
configuring the global machine learning model (104) using the aggregated adjusted parameters (712);
performing a global model electronic risk audit of the global machine learning model (104) configured according to the aggregated adjusted parameters (712);
based on an electronic global model risk score of the global machine learning model (104) configured according to the aggregated adjusted parameters (712), determined via the global model electronic risk audit, implementing one or more of the parameter privacy adjustment methods (116) on the aggregated adjusted parameters (712), to generate updated aggregated adjusted parameters (712U), wherein, as the electronic global model risk score increases, the more of the parameter privacy adjustment methods (116) are used to adjust the aggregated adjusted parameters (712);
using the updated aggregated adjusted parameters (712U) to configure the global machine learning model (104); and
wherein providing, to the client devices (106), the global machine learning model (104) configured according to the respective parameters (112) as adjusted, comprises providing, to the client devices (106), the global machine learning model (104) configured according to the updated aggregated adjusted parameters (712U).

6. The method (300) of claim 5, further comprising:
iteratively repeating the respective electronic risk audits, of one or more of the client devices (106), and the global model electronic risk audit of the global model, and implementing the one or more parameter privacy adjustment methods (116) on the respective parameters (112) received from the client devices (106) and the aggregated adjusted parameters (712) until the respective electronic risk scores are below a threshold risk score.

7. The method (300) of claim 5, further comprising:
receiving raw training data (110), associated with the client devices (106), to measure one or more of: metrics of the global machine learning model (104) configured according to the aggregated adjusted parameters (712); and data reconstruction ability of the global machine learning model (104) configured according to the aggregated adjusted parameters (712).

8. The method (300) according to one of claims 1 to 7, further comprising:
dynamically adjusting the parameter privacy adjustment methods (116) to achieve a balanced tradeoff between utility and risk of the global machine learning model (104).

9. The method (300) according to one of claims 1 to 8, wherein implementing the one or more parameter privacy adjustment methods (116) on the respective parameters (112) includes:
implementing two or more of the parameter privacy adjustment methods (116) on the respective parameters (112); and
one or more of adding and modifying weighting of the two or more of the parameter privacy adjustment methods (116).

10. The method (300) according to one of claims 1 to 9, further comprising: prior to performing the respective electronic risk audits, performing one or more of the parameter privacy adjustment methods (116) on the respective parameters (112) received from the client devices (106).

11. A computing device (102) for performing federated learning, the computing device (102) comprising:
a communication interface (208);
a controller (202); and
a computer-readable storage medium (204) having stored thereon program instructions (206) that, when executed by the controller (202), causes the controller (202)to perform a set of operations comprising the method (300) of any one of claims 1 to 10.

12. A non-transitory computer-readable storage medium (204) having stored thereon program instructions (206) that, when executed by at least one computing device (102), causes the at least one computing device (102) to perform the method (300) of any one of claims 1 to 10.
